# EUROPÄISCHE PATENTANMELDUNG

(11) **EP 2 662 813 A1**
(43) Veröffentlichungstag der Anmeldung: **13.11.2013**
(21) Anmeldenummer: 13167156.2
(22) Anmeldetag: 08.05.2013
(51) Int. Cl.: G06Q 10/08

(54) **Verfahren zum Registrieren, Inventarisieren, Verwalten, Überprüfen und Überwachen von materiellen und immateriellen Rechten und/oder Gütern**

(30) Priorität: 09.05.2012 DE 102012104088; 22.02.2013 DE 102013101804; 25.02.2013 DE 102013101851
(71) Anmelder: Hörmann, Markus, 89281 Altenstadt / Illereichen (DE)
(72) Erfinder: Hörmann, Markus, 89281 Altenstadt / Illereichen (DE)
(74) Vertreter: Hutzelmann, Gerhard

(57) **Zusammenfassung**

Verfahren zum Registrieren, Inventarisieren, Verwalten, Überprüfen und Überwachen von materiellen und immateriellen Rechten und/oder Gütern, insbesondere von Mobilien, Immobilien, Versicherungen oder dergleichen, wobei eine Bestandserfassung vorgesehen ist, in die alle Rechte und/oder Güter mit ihren jeweiligen Identifikationsdaten und/oder einer Kennzeichnung eingetragen werden.

## Beschreibung

Die Erfindung bezieht sich auf ein Verfahren zum Registrieren, Inventarisieren, Verwalten, Überprüfen und Überwachen von materiellen und immateriellen Rechten und/oder Gütern, insbesondere von Mobilien, Immobilien, Versicherungen oder dergleichen.

Jedes Jahr werden viele Maschinen, Vorrichtungen bzw. alle Arten von Mobilien hergestellt oder importiert. Gerade wenn es sich bei solchen Mobilien um Investitionsgüter handelt oder aber diese später beliehen oder versichert werden sollen, ist ein lückenloser Lebenslauf solcher Mobilien äußerst wichtig um Betrug oder dergleichen zu vermeiden.

Zudem werden von natürlichen und juristischen Personen viele verschiedenartige Versicherungen bei unterschiedlichsten Versicherern abgeschlossen oder immaterielle Rechte gehandelt.

Gerade bei der Finanzierung oder der Sicherungsübereignung von Gütern und Rechten, insbesondere von Maschinen und anderen Betriebseinrichtungen aber auch anderen Gegenständen ist es meistens eine Forderung des Sicherungsnehmers, daß neben der Sicherungsübereignung eine adäquate Versicherung für das als Sicherheit genommene Recht abgeschlossen wird. Eine solche Absicherung muss dann im Schadensfall an den Sicherungsnehmer zur Abgeltung seiner Ansprüche leisten. Bei Liegenschaften und zulassungspflichtigen Fahrzeugen ist ein solches Vorgehen bekannt und üblich.

Desweiteren kommt es im Schadensfall immer wieder dazu, daß fälschlicherweise an den Sicherungsgeber ausbezahlt wir, anstatt an den Sicherungsnehmer. Dies stellt sowohl für den Versicherer als auch für den Sicherungsnehmer einen erheblichen Schaden dar, da im Zweifel der Versicherer doppelt leisten muss.

Auch sind immer wieder Probleme mit Doppelversicherungen, Versicherungsbetrug usw. an der Tagesordnung.

Aufgabe der Erfindung ist es daher, ein Verfahren vorzuschlagen, welches Doppelversicherungen, Doppelbeleihungen, Doppelfinanzierungen, Versicherung, Beleihung und Finanzierung von nicht vorhandenen Gütern, doppelte oder fiktive Schadensabrechnungen oder dergleichen neben allen anderen vorgenannten Problemen, verhindert. Zudem soll das Verfahren für materielle und immaterielle Güter und Rechte, also auch für Versicherungen, Mobilien und Immobilien einsetzbar sein.

Diese Aufgabe wird erfindungsgemäß dadurch gelöst, daß eine Bestandserfassung vorgesehen ist, in die alle Rechte und/oder Güter mit ihren jeweiligen Identifikationsdaten und/oder einer Kennzeichnung eingetragen werden.

Dadurch wird eine umfassende Datenbasis geschaffen, die alle wesentlichen Rechte und Güter erfasst.

Äußerst vorteilhaft ist es erfindungsgemäß auch, wenn die Güter direkt bei ihrer Herstellung, Erzeugung oder beim Import und/oder Rechte bei ihrer Entstehung eingetragen werden.

Hierdurch wird ein Gut bzw. Recht geboren, was durch den Registereintrag dokumentiert wird.

Eine weitere sehr vorteilhafte Ausgestaltung des erfindungsgemäßen Verfahrens liegt vor, wenn die Rechte und/oder Güter durch eine amtliche oder anderweitig staatlich oder privatrechtlich legitimierte Stelle eingetragen werden.

Damit werden unzulässige Eintragungen verhindert. Es wird zudem sichergestellt, daß jedes eingetragene Recht bzw. Gut tatsächlich existiert. Jedes Recht bzw. Gut wird erschaffen und existiert damit.

Sehr vorteilhaft ist es erfindungsgemäß auch, wenn jedes materielle oder immaterielle Recht und/oder Gut durch eine individuelle, virtuelle oder tatsächliche Kennzeichnung unterscheidbar und erfassbar gemacht wird.

Hiermit wird vermieden, daß Rechte bzw. Güter doppelt erfasst werden. Die individuelle, virtuelle oder tatsächliche Kennzeichnung kann dabei beispielsweise offen und/oder verdeckt angebracht sein. Jedenfalls wird jedes Gut hierdurch eindeutig identifizierbar.

Sehr vorteilhaft ist es auch, wenn Daten über jedes Recht und/oder Gut hinsichtlich seines Standes, seines Zustandes, seines Verlaufes, seines Ortes, seines Besitzers, seines Eigentümers, seiner Versicherung, seiner Beleihung, des jeweiligen versicherten Objekts und/oder dergleichen erfasst werden.

Dadurch können sehr viele, relevante Informationen über jedes Recht bzw. Gut ermittelt und abgeglichen werden. Insbesondere kann der Standort von Gütern abgeglichen werden. Eine Ortung beispielsweise über GPS ist denkbar.

Ebenfalls äußerst vorteilhaft ist es gemäß einer Fortbildung der Erfindung, wenn zusätzlich Finanzierungsdaten, Sicherungsübereignungsdaten, Finanzdaten, Versicherungsdaten, Vorversicherungen, Schadensereignisse oder dergleichen erfasst und eingetragen werden.

Hierdurch kann eine vollständige Verknüpfung erfolgen, die Mißbrauch mit Rechten bzw. Gütern aller Art verhindert, wie es sonst nur ein Grundbuch oder dergleichen teilweise zu verhindern vermag.

Eine weitere sehr vorteilhafte Ausgestaltung der Erfindung liegt auch vor, wenn auf allen Datenebenen bei der Erfassung von Daten eine Dublettenprüfung durchgeführt wird.

Hierdurch können Doppel-Beleihungen, Doppel-Versicherungen oder dergleichen und auch gestohlene Rechte/Güter ebenso ermittelt werden, wie auch nicht vorhandene Rechte/Güter. Zudem kann problemlos die Verbringung von Gütern, deren ordnungsgemäße Instandhaltung, Versicherung oder dergleichen erfasst werden. Güter lassen sich so auch wieder auffinden, wenn diese verbracht worden sind. Vor allem wenn eine unsichtbare Identifikation angebracht ist, können auch Güter wieder aufgefunden werden, die zum Beispiel Gegenstand eines Versicherungsfalls oder eines Diebstahles sind und verbracht worden sind.

Äußerst vorteilhaft ist es erfindungsgemäß auch, wenn verschiedene Zugangsebenen zur Datenbasis vorgesehen sind, die eine mißbräuchliche Nutzung unterbinden.

Hierdurch wird verhindert, daß Querverbindungen gezogen werden können. So kann zum Beispiel verhindert werden, daß aufgrund einer Beleihung oder Finanzierung von Maschinen auf die Bonität einer Firma geschlossen werden kann.

Erfindungsgemäß äußerst vorteilhaft ist es, wenn das Verfahren softwareimplementiert ist und auch als Online-Portal ausgeführt werden kann.

Hierdurch ist eine sehr einfache und anwenderfreundliche Anwendbarkeit gegeben, zumal die Anwender sicherlich nicht räumlich beieinander sein werden.

Eine weitere sehr vorteilhafte Ausgestaltung der Erfindung liegt vor, wenn ein digitaler Sicherungsschein für materielle und immaterielle Rechte und/oder Güter erstellt wird.

Mit einem solchen Sicherungsschein kann sehr leicht eine Sicherungsübereignung vorgenommen werden.

Ebenfalls sehr vorteilhaft ist es erfindungsgemäß, wenn ein digitaler Eigentumsnachweis für materielle und immaterielle Rechte und/oder Güter erstellt wird.

Damit kann sehr leicht der Nachweis des Eigentums erbracht werden. Durch die lückenlose Nachverfolgbarkeit im Register ist ein solcher Eigentumsnachweis auch sehr verläßlich.

Eine weitere sehr vorteilhafte Weiterbildung des erfindungsgemäßen Verfahrens liegt vor, wenn Zusammenstellungen gestohlener, beschädigter oder anderweitig auffällig gewordener Rechte und/oder Güter erstellt und/oder veröffentlicht werden.

Hierdurch können andere Marktteilnehmer gewarnt werden. Auch die Aufklärung von Betrug, Unterschlagung, Diebstahl oder dergleichen kann verbessert werden.

Äußerst vorteilhaft ist es erfindungsgemäß, wenn eine ein- oder mehrfache Verknüpfung unterschiedlicher Datenquellen erfolgt und so die Authentizität und die Relevanz der einzelnen Daten verbessert wird.

Dadurch lässt sich die Sicherheit deutlich erhöhen. Falsche Eintragungen fallen auf bzw. werden rechtzeitig verhindert. Die eingetragenen Daten werden dadurch verlässlich.

Eine erfindungsgemäß sehr vorteilhafte Fortbildung der Erfindung liegt auch vor, wenn bei materiellen Gütern als Kennzeichnung eine optische oder elektronische Kennzeichnung, insbesondere ein QR-Code ein RFID-Transponder oder dergleichen angebracht wird, die aus- bzw. einlesbar ausgebildet sein können, wobei die Auslesung vor Ort oder aus der Ferne erfolgen kann, wobei die vor-Ort-Auslesung mit einem Lesegerät erfolgen kann, das eine Positionsermittlung aufweisen kann.

Dadurch kann sehr leicht die Identität eines jeden Gutes festgestellt und überprüft werden. Eine Fernauslesung kann beispielsweise über eine Maschinensteuerung und über Internet erfolgen.

Im folgenden ist die Erfindung anhand eines Ausführungsbeispiels veranschaulicht.

Viele Maschinen und Anlagen, aber auch materielle und immaterielle Rechte und/oder Güter im Sinn dieser Erfindung werden finanziert oder dienen als Sicherheit bei der Aufnahme von Krediten.

Die Finanzierer bzw. Darlehensgeber haben ein berechtigtes Interesse daran, daß diese entsprechende Sicherheiten für ihr finanzielles Engagement erhalten.

Zudem werden viele materielle und immaterielle Rechte und/oder Güter gegen verschiedenste Gefahren versichert.

Hier liegt es im Interesse der Versicherer, Doppelversicherungen ebenso zu vermeiden wie Versicherungsbetrug zum Beispiel durch Doppel-Abrechnungen.

Hierfür ist es zunächst wichtig, einen verlässlichen Nachweis über die jeweiligen Rechte bzw. Güter, also über deren Existenz und die zugehörigen Besitz- und Eigentumsverhältnisse zu erlangen.

Für die oben genannten Finanzierungen bzw. Beleihungen werden Güter aller Art an die Geldgeber sicherungsübereignet.

Für die Geldgeber oder Versicherer oder andere, die ein berechtigtes Interesse haben, ist es in der Regel derzeit schlicht unmöglich, zu prüfen, ob das jeweilige Recht bzw. Gut überhaupt existent ist, bereits Gegenstand einer aktuellen, also noch andauernden Sicherungsübereignung ist und ob das Recht bzw. Gut beleihbar ist. Ebenfalls ist derzeit in der Regel nicht überprüfbar, ob sich das jeweilige Recht bzw. Gut tatsächlich im Eigentum des Pfandgebers befindet. Ein besonders interessantes Beispiel sind hier Photovoltaik- oder Windkraftanlagen. Für diese ist gerade im Offshore-Bereich (hauptsächlich Windkraftanlagen) in der Regel bislang kein Eigentumsnachweis erbringbar.

Anders als für Kraftfahrzeuge oder Immobilien gibt es hier keine amtlichen Dokumente, die genutzt werden könnten. Ein Fahrzeugbrief oder Grundbuch ist einfach nicht existent.

Deswegen wurden bislang Überprüfungen vor Ort durchgeführt, um wenigstens festzustellen, ob die jeweiligen Güter am angegebenen Ort stehen. Die Prüfung von immateriellen Rechten war bislang völlig unmöglich.

Nicht überprüft werden kann jedoch, ob das jeweilige Recht bzw. Gut bereits anderweitig sicherungsübereignet ist oder wer Eigentümer bzw. Besitzer ist. Ebenso ist es bislang in der Regel nicht möglich, bestehende Versicherungen aufzufinden, Schadensereignisse in der Vergangenheit zu prüfen und auch den Schadensverlauf festzustellen.

Auch nicht überprüfbar ist, ob das bei einer solchen Überprüfung vorgefundene Recht bzw. Gut tatsächlich demjenigen entspricht, das angegeben wurde.

Zudem sind diese Überprüfungen nicht nur personal- und zeitintensiv, sondern verursachen auch erhebliche Kosten.

Um eine hinreichende Sicherheit zu gewährleisten, müssen derzeit die Überprüfungen mehrfach und wiederkehrend durchgeführt werden.

Mit dem erfindungsgemäßen Verfahren ist es nunmehr möglich, nicht nur die Existenz und die Identität eines Rechtes bzw. Gutes zweifelsfrei festzustellen, sondern auch alle anderen relevanten Daten hinsichtlich Eigentum, Besitz, Gegenstand einer Sicherungsübereignung, Versicherungen, Schäden usw. zu überprüfen. Die Sicherheit für den Darlehensgeber und auch für Versicherer, Käufer, Nutzer usw. wird erhöht und zugleich die Kosten drastisch zu reduziert.

Hierzu werden zunächst alle vorab definierten Rechte bzw. Güter, hierzu zählen in der Regel auch Maschinen, Anlagen, immaterielle Rechte, aber auch Fahrzeuge und Immobilien bei deren Herstellung bzw. bei deren Import aus einem nicht das erfindungsgemäße Verfahren nutzenden Gebiet individuell gekennzeichnet bzw. mit individuellen Merkmalen in ein Register eingetragen. Bei entstehen eines Rechtes wird dies ebenfalls in das Register eingetragen.

Hierdurch entsteht zunächst der Existenznachweis des jeweiligen Rechtes bzw. Gutes. Hierzu zählen auch zu versichernde und zu belastende Rechte bzw. Güter.

Durch diese Individualisierung mit unverwechselbaren Merkmalen, es können dabei auch Merkmale wie Fabriknummern, Registernummern oder dergleichen herangezogen werden, sind die jeweiligen Rechte eindeutig identifizierbar. Um die eindeutige Identifizierbarkeit herzustellen, können auch mehrere Merkmale zu einer Gruppe zusammengefasst werden, um zumindest eine sehr große Wahrscheinlichkeit für eine eindeutige Identifizierbarkeit herzustellen.

Eine individuelle Kennzeichnung kann bei materiellen Gegenständen beispielsweise optisch, zum Beispiel durch Anbringen einer Seriennummer, eines Codes oder elektronisch, zum Beispiel durch Anbringen eines RFID-Tags vorgenommen werden. Bei immateriellen Rechten können die Merkmale des Rechts herangezogen und derart zusammengefasst bzw. verknüpft werden, daß jedes Recht individualisierbar ist. Bei einer elektronischen Kennzeichnung kann diese sichtbar und unsichtbar vorgenommen werden. So ist es denkbar, daß ein RFID-Tag hinter einem Typenschild angebracht wird und so normal nicht sichtbar ist. Auch an anderen Stellen kann eine solche verdeckte Kennzeichnung erfolgen, wobei diese auch bereits vom Hersteller vorgesehen werden kann. Eine Kennzeichnung mit künstlicher DNA ist denkbar.

Bei immateriellen Rechten ist eine zusätzliche Kennzeichnung in der Regel nicht anbringbar.

Mit dieser Kennzeichnung wird das jeweilige Recht bzw. Gut in das Register eingetragen.

Zusätzlich können in das Register Bestandsdaten zu jedem Gegenstand aufgenommen werden. Zum Beispiel technische Daten, Wartungsdaten, Besitz- und Eigentumsdaten, Ortsdaten, Sicherungsübereignungen, Versicherungsdaten, Schadensereignisse und dergleichen.

Durch diese Maßnahmen kann einerseits der Nachweis der Herstellung bzw. Erzeugung geführt werden und andererseits die Existenz und das Eigentum nachgewiesen werden.

Wird nun ein Recht bzw. Gut versichert oder für eine Sicherungsübereignung genutzt, wird dies vermerkt. Soll dasselbe Gut nochmals für eine weitere Sicherungsübereignung genutzt werden, so kann dies durch eine Dublettenprüfung erkannt werden. Bei Beendigung einer Sicherungsübereignung wird diese selbstverständlich ebenso vermerkt. Zugleich kann auch bei jeder Überprüfung festgestellt werden, ob Mehrfachversicherungen oder noch unerledigte Schadensereignisse vorliegen. Schadensereignisse werden in der Regel Diebstahl, Entwendung und Unterschlagung betreffen, können aber auch andere Sachverhalte erfassen.

Ebenso können bei einem Verkauf die Eigentumsverhältnisse ermittelt und überprüft werden.

Wenn nun ein Recht bzw. Gut, insbesondere eine Maschine oder Anlage finanziert wird, wird dies entsprechend eingetragen. Vor allem kann nicht nur die Finanzierungshöhe, sondern auch die Finanzierungsdauer vermerkt werden.

Kurz vor Ende des Versicherungs- bzw. Finanzierungszeitraumes kann auch dies angezeigt werden.

Im Falle einer Insolvenz, eines Diebstahles oder auch eines Verkaufes des jeweiligen Gutes wird dies ebenfalls vermerkt.

Soll nun ein Recht oder Gut neu finanziert bzw. beliehen oder auch versichert werden, kann der derzeitige Status abgefragt werden.

Genauso können bei Abschluß einer Versicherung durch Prüfung des Registers Doppelversicherungen ausgeschlossen werden. Auch während des Bestehens einer Versicherung können so Schadensereignisse, beispielsweise hinsichtlich ihrer Rechtmäßigkeit, überwacht werden.

Im Schadensfall kann auch sichergestellt werden, daß die Auszahlung der Versicherungssumme im Falle einer Sicherungsübereignung an den Sicherungsnehmer anstatt an den Sicherungsgeber erfolgt. Gerade dies war in der Vergangenheit ein Problem und hat dazu geführt, daß Versicherungen in Unkenntnis oder aber durch mangelnde Überwachung Versicherungssummen an den Eigentümer/Besitzer eines Rechts ausbezahlt haben anstatt an den Sicherungsnehmer zu zahlen. Die Versicherungen mussten dann nochmals an den Sicherungsnehmer zahlen. Dies hat zu unerwünschten Mehrbelastungen geführt, die es zu vermeiden gilt.

Ebenso kann Versicherungsbetrug oder aber auch Betrug mit Sicherungsübereignungen verhindert und aufgezeigt werden.

Zur Sicherstellung der Vertraulichkeit aller Daten wird der Zugriff reglementiert. Nur mit den entsprechenden Berechtigungen können Daten abgefragt werden.

Mit dem erfindungsgemäßen Verfahren werden nicht nur Mehrfach-Finanzierungen und die damit verbundenen Doppel- oder Mehrfach-Sicherungsübereignungen ausgeschlossen, sondern auch Verluste und Ausfälle auf Seiten der Finanzierer verhindert. Problemfälle werden frühzeitig aufgedeckt.

Wie oben bereits angesprochen betrifft dies auch Versicherungsunternehmen. Die Versicherung von eventuell nicht existenten Rechten oder Gütern oder auch die Doppelversicherung von Rechten wird vermieden.

So kann auch vermieden werden, daß Gegenstände, die bereits einen Totalschaden erlitten haben, nicht mehr, bzw. nur nach Klärung der jeweiligen Situation, normalerweise werden Totalschäden verschrottet, neu Gegenstand einer Finanzierung, Sicherungsübereignung, Versicherung oder dergleichen werden.

Andererseits bietet das erfindungsgemäße Verfahren auch für den Sicherungsgeber, d.h. für den Kreditnehmer, Versicherungsnehmer oder dergleichen erhebliche Vorteile. So kann er kurz vor dem Ablauf von bestehenden Finanzierungen vorgewarnt werden, um rechtzeitig Refinanzierungen in die Wege leiten zu können. Zudem hat er jederzeit Finanzierungen und deren Laufzeiten im Blick. Versicherungsprobleme, beispielsweise hinsichtlich einer Unterdeckung können auch frühzeitig aufgedeckt werden.

Selbst beim Kauf von Rechten kann sichergestellt werden, daß der Käufer tatsächlich das Eigentum und das Verfügungsrecht an den Rechten eingeräumt bekommt. Auch kann die Historie eines Rechts durchaus für dessen besondere Qualität herangezogen werden und kann diesem auch einen besonderen Wert verleihen.

Die oben genannten Überprüfungen vor Ort können reduziert werden, wodurch sich auch die Begleitkosten gerade bei Sicherungsübereignungen deutlich verringern.

Zudem ist es möglich, im Falle von Zahlungsschwierigkeiten die rechtzeitige Sicherstellung der Rechte bzw. Güter einzuleiten bzw. die Versicherung rechtzeitig zu beenden. Durch die Zusammenfassung aller hierzu notwendigen Informationen werden Koordinations- und Abwicklungsaufwand reduziert.

Die im Register erfassten Daten können in die Daten der Finanzierer, die Daten der Versicherer, die Daten der Kreditnehmer und die Maschinendaten unterteilt werden. Damit wird eine weitere Sicherheit gegen unerwünschte Querverbindungen gewährleistet. Die Daten der Kreditnehmer können dabei auch anonymisiert erfasst sein.

Der Zugriff auf das Register kann über Abonnements, Einzelzugriffe und dergleichen abgewickelt werden.

In das Register können nicht nur Mobilien und immaterielle Rechte aufgenommen werden. Vielmehr besteht auch die Möglichkeit Liegenschaften mit aufzunehmen. Das durch das erfindungsgemäße Verfahren geschaffene Register kann auch als Weiterentwicklung von Liegenschaftsregistern gesehen werden, das insgesamt allen beteiligten Parteien eine äußerst große Sicherheit gegen Betrug oder dergleichen bietet.

Liegenschaften und Fahrzeuge, für die Fahrzeugbriefe existieren, können mit in das durch das erfindungsgemäße Verfahren geschaffene Register aufgenommen werden.

Unterschiedliche Register bzw. Datenbasen werden zusammengeführt, wodurch sich die Möglichkeit eines grenzüberschreitenden Abgleichs ergibt. Dies ist gerade im Hinblick auf den gemeinsamen Markt und die immer weiter zusammenwachsenden Wirtschaftsräume auf der Welt durch Globalisierung sehr wichtig.

Auch kann durch solch eine zentralisierte Erfassung und Abgleichung die Akzeptanz von derzeit nicht voll akzeptierten Wirtschaftsräumen gesteigert werden. Es lässt sich sogar die Korruption verringern.

Durch die Erteilung von digitalen Sicherungsscheinen und digitalen Eigentumsnachweisen lassen sich Sicherungs- und Eigentumsverhältnisse sehr leicht und fälschungssicher nachweisen.

Gerade im Kraftfahrzeugbereich gelten KFZ-Briefe und Zulassungsbescheinigungen nicht als Eigentumsnachweise. Sogar diese können mit dem erfindungsgemäßen Verfahren ergänzt werden, so daß ein zweifelsfreier Eigentumsnachweis geführt werden kann.

Gestohlene, beschädigte oder anderweitig auffällig gewordene Rechte bzw. Güter können auch in Zusammenstellungen dargestellt und veröffentlicht werden, wodurch andere Marktteilnehmer geschützt werden können. Die Gefahr, daß diese Rechte bzw. Güter versehentlich nochmals Gegenstand einer Beleihung, Versicherung oder eines Kaufs werden, ohne daß die bestehenden Zweifel zuvor ausgeräumt werden konnten, wird deutlich verringert. Auch die Beleihung, Versicherung oder der Kauf eines bereits nicht mehr existenten Rechtes bzw. Gutes, das beispielsweise Gegenstand eines Totalschadens war, wird so verhindert.

Die Schadens- oder Diebstahlhistorie eines Rechtes bzw. Gutes kann ebenfalls dargestellt und genutzt werden. Beides kann in anonymisierter Form geschehen, solange kein Einverständnis betroffener Personen vorliegt.

Jegliche Art von Betrug wird präventiv verhindert.

Durch ein mehrfaches Verfahren zwischen allen Beteiligten werden diese verknüpft und auch die Datenquellen einander zugeordnet und ebenfalls verknüpft. Die daraus gewonnenen Daten sind dabei von nachvollziehbarer Authentizität und hoher Relevanz. Falscheintragungen werden verhindert bzw. werden zumindest schnell erkannt, da diese nicht verknüpft werden können.

Bei der Verknüpfung der Daten werden diese weitestgehend anonymisiert, so daß unerwünschte Rückschlüsse auf anderweitige Bereiche ausgeschlossen sind.

Dennoch erhalten alle beteiligten Verkehrskreise die notwendige Sicherheit am Markt.

## Patentansprüche

1. Verfahren zum Registrieren, Inventarisieren, Verwalten, Überprüfen und Überwachen von materiellen und immateriellen Rechten und/oder Gütern, insbesondere von Mobilien, Immobilien, Versicherungen oder dergleichen, **dadurch gekennzeichnet, daß** eine Bestandserfassung vorgesehen ist, in die alle Rechte und/oder Güter mit ihren jeweiligen Identifikationsdaten und/oder einer Kennzeichnung eingetragen werden.

2. Verfahren nach Anspruch 1, **dadurch gekennzeichnet, daß** die Güter direkt bei ihrer Herstellung, Erzeugung oder beim Import und/oder daß Rechte bei ihrer Entstehung eingetragen werden.

3. Verfahren nach Anspruch 1 oder 2, **dadurch gekennzeichnet, daß** die Rechte und/oder Güter durch eine amtliche oder anderweitig staatlich oder privatrechtlich legitimierte Stelle eingetragen werden.

4. Verfahren nach Anspruch 1, 2 oder 3, **dadurch gekennzeichnet, daß** jedes materielle oder immaterielle Recht und/oder Gut durch eine individuelle, virtuelle oder tatsächliche Kennzeichnung unterscheidbar und erfassbar gemacht wird.

5. Verfahren nach einem der vorangehenden Ansprüche, **dadurch gekennzeichnet, daß** Daten über jedes Recht und/oder Gut hinsichtlich seines Standes, seines Zustandes, seines Verlaufes, seines Ortes, seines Besitzers, seines Eigentümers, seiner Versicherung, seiner Beleihung, des jeweiligen versicherten Objektes und/oder dergleichen erfasst werden.

6. Verfahren nach einem der vorangehenden Ansprüche, **dadurch gekennzeichnet, daß** zusätzlich Finanzierungsdaten, Sicherungsübereignungsdaten, Finanzdaten, Versicherungsdaten, Vorversicherungen, Schadensereignisse oder dergleichen erfasst und eingetragen werden.

7. Verfahren nach einem der vorangehenden Ansprüche, **dadurch gekennzeichnet, daß** auf allen Datenebenen bei der Erfassung von Daten eine Dublettenprüfung durchgeführt wird.

8. Verfahren nach einem der vorangehenden Ansprüche, **dadurch gekennzeichnet, daß** verschiedene Zugangsebenen zur Datenbasis vorgesehen sind, die eine mißbräuchliche Nutzung unterbinden.

9. Verfahren nach einem der vorangehenden Ansprüche, **dadurch gekennzeichnet, daß** das Verfahren softwareimplementiert ist und auch als Online-Portal ausgeführt werden kann.

10. Verfahren nach einem der vorangehenden Ansprüche, **dadurch gekennzeichnet, daß** ein digitaler Sicherungsschein für materielle und immaterielle Rechte und/oder Güter erstellt wird.

11. Verfahren nach einem der vorangehenden Ansprüche, **dadurch gekennzeichnet, daß** ein digitaler Eigentumsnachweis für materielle und immaterielle Rechte und/oder Güter erstellt wird.

12. Verfahren nach einem der vorangehenden Ansprüche, **dadurch gekennzeichnet, daß** Zusammenstellungen gestohlener, beschädigter oder anderweitig auffällig gewordener Rechte und/oder Güter erstellt und/oder veröffentlicht werden.

13. Verfahren nach einem der vorangehenden Ansprüche, **dadurch gekennzeichnet, daß** eine ein- oder mehrfache Verknüpfung unterschiedlicher Datenquellen erfolgt und so die Authentizität und die Relevanz der einzelnen Daten verbessert wird.

14. Verfahren nach einem der vorangehenden Ansprüche, **dadurch gekennzeichnet, daß** bei materiellen Gütern als Kennzeichnung eine optische oder elektronische Kennzeichnung, insbesondere ein QR-Code ein RFID-Transponder oder dergleichen angebracht wird, die aus- bzw. einlesbar ausgebildet sein können, wobei die Auslesung vor Ort oder aus der Ferne erfolgen kann, wobei die vor-Ort-Auslesung mit einem Lesegerät erfolgen kann, das eine Positionsermittlung aufweisen kann.
